# EUROPÄISCHE PATENTSCHRIFT

(11) **EP 1 900 078 B1**
(45) Veröffentlichungstag und Bekanntmachung des Hinweises auf die Patenterteilung: **13.04.2011**
(21) Anmeldenummer: 06763937.7
(22) Anmeldetag: 28.06.2006
(51) Int. Cl.: H02K 3/487, H02K 3/493

(54) **NUTVERSCHLUSS**
SLOT SEAL
FERMETURE D'ENCOCHE

(30) Priorität: 01.07.2005 DE 102005030877
(43) Veröffentlichungstag der Anmeldung: 19.03.2008
(73) Patentinhaber: SIEMENS AKTIENGESELLSCHAFT, 80333 München (DE)
(72) Erfinder: KLAUSSNER, Bernhard, 90408 Nürnberg (DE)
(86) Internationale Anmeldenummer: PCT/EP2006/063641
(87) Internationale Veröffentlichungsnummer: WO 2007/003546

(56) Entgegenhaltungen:
- DE-A1- 2 060 361
- DE-A1- 2 123 520
- DE-A1- 2 910 735
- DE-B- 1 040 671
- DE-C- 967 528
- DE-U1- 29 908 925
- US-A- 2 710 931
- US-A- 3 242 239
- US-A- 3 719 988
- US-A- 3 940 647
- US-A- 4 200 818
- US-A- 5 598 049
- PATENT ABSTRACTS OF JAPAN Bd. 006, Nr. 087 (E-108), 25. Mai 1982 (1982-05-25) & JP 57 022345 A (TOSHIBA CORP), 5. Februar 1982 (1982-02-05)

## Beschreibung

Die Erfindung betrifft einen Nutverschluss für eine elektrische Maschine, die zur Aufnahme einer elektrischen Leiteranordnung mindestens eine Nut mit einer Nutöffnung enthält, wobei der Nutverschluss zum Verschluss der Nutöffnung einsetzbar ist.

Nutverschlüsse werden bei elektrischen Maschinen verwendet, um Nuten des Läufers und/oder des Ständers abzuschließen. In die Nuten sind Leiteranordnungen eingelegt, welche die Funktionsweise der elektrischen Maschine gewährleisten. Die Leiteranordnungen werden durch Wicklungssysteme aus isolierten Drähten realisiert. Durch die Nutverschlüsse wird gewährleistet, dass die Wicklungssysteme nicht herausfallen oder während der Montage des Motors mechanisch beschädigt werden können.

Es ist aus der Schrift DE 1 288 186 A bekannt, wie ein Nutverschluss gestaltet werden kann. Dort ist der Nutverschluss als starrer Nutverschlusskeil ausgeführt.

Aus der US 3 719 998 sind Abstandselemente bekannt, die zur Zentrierung des Rotors einer elektrischen Maschine dienen.

Aus der DE 2 060 361 A ist ein aus glasfaserverstärktem Kunststoff bestehender Nutverschlusskeil für elektrische Maschinen bekannt, der einen Hohlraum aufweist, der mit einem härtbaren Gießharz ausgefüllt wird.

Aus der US 2 710 931 ist ein Nutverschlusskeil aus gesintertem Material bekannt, der eine gebogene Form aufweist.

Aus der US 4 200 818 ist ein Nutverschlusskeil für eine dynamoelektrische Maschine bekannt, der einen glasfaserverstärktem Kern mit einem imprägnierten Harz aufweist.

Aus der DE 967 528 ist ein Nutverschluss für elektrische Maschinen bekannt, der sich besonders durch eine hohe Wärmebeständigkeit auszeichnet.

Aus der DE 10 40 671 ist ein Nutverschluss für elektrische Maschinen bekannt, der auf die Wicklung eine elastische Druckwirkung ausübt.

Aus der US 5 598 049 ist eine Anordnung bekannt, um die Nuten einer dynamoelektrischen Maschine abzuschließen.

Aus der JP 57022345 ist ein Nutverschluss für eine dynamoelektrische Maschine bekannt, der magnetisierbares Material enthält.

Nachteilig ist aber, dass zwischen Nutverschluss und eingelegter Leiteranordnung meist ein Zwischenraum besteht, so dass die Leiteranordnung nicht optimal fixiert ist. Dadurch kann sich die Leiteranordnung während des Betriebs oder Transports der elektrischen Maschine in der Nut bewegen, wodurch die Isolierung der Leiteranordnung beschädigt werden kann, indem sie durchscheuert, und Kurzschlüsse können entstehen.

Der Erfindung liegt deshalb die Aufgabe zugrunde, einen Nutverschluss anzugeben, welcher die Leiteranordnung in der Nut fest fixiert.

Diese Aufgabe wird erfindungsgemäß dadurch gelöst, dass die Abdeckung aus magnetischem Material ist und dass das Grundmaterial des Nutverschlusses zusamnen mit dem magnetischen Material der Abdeckung als Co-Extrudat gefertigt ist.

Damit wird vorteilhaft erreicht, dass sich die Leiteranordnung in den Nuten nicht bewegen kann und die Isolierung der Leiteranordnung nicht durch Bewegungen oder Durchscheuern beschädigt werden kann. Ist die bauchförmige Wölbung federnd, so passt sich der Nutverschluss während des Einführens in die Nut der darin bereits eingelegten Leiteranordnung an und hält diese durch seine federnde Wirkung fest in der Nut. Sollte sich die Leiteranordnung während des Betriebs der elektrischen Maschine verschieben, so dass ein Zwischenraum zwischen Leiteranordnung und Wölbung entsteht, so wird dieser sofort wegen der federnden Wirkung der Wölbung durch den Nutverschluss ausgefüllt. Ist die bauchförmige Wölbung verformbar, so passt sich der Nutverschluss während des Einführens in die Nut der darin bereits eingelegten Leiteranordnung an und fixiert diese in der Nut. Durch die Abdeckung der Wölbung ergibt sich weiterhin eine erhöhte Stabilität des Nutverschlusses. Weiterhin kann durch die Abdeckung eine Vorspannung in der Wölbung erzeugt werden. Die Leiteranordnung kann dabei aus Runddrähten, stabförmigen Anordnungen oder Litzenleitern gebildet werden. Die Nuten können sich dabei im Läufer und/oder im Ständer der elektrischen Maschine befinden.

Demnach kann der Nutverschluss so gestaltet werden, dass er aus der durchgehenden Abdeckung mit einer durchgehenden Wölbung besteht. Alternativ ist die Wölbung aber auch an mehreren Stellen unterbrochen, so dass der Nutverschluss an diesen Stellen nur aus der Abdeckung besteht. Weiterhin kann der Nutverschluss auch derart gefertigt sein, dass die Wölbung durchgängig ist und die Abdeckung Unterbrechungen aufweist, so dass statt einer durchgehenden Abdeckung auch nur mehrere Stege ausgebildet sind. Eine mögliche elektrische Maschine, bei der die Erfindung eingesetzt werden kann, ist z.B. eine Niederspannungsmaschine mit Wicklungssystemen aus Runddrähten.

Eine weitere vorteilhafte Ausgestaltung ergibt sich, wenn der Nutverschluss ein Extrudat ist, d.h. mit einem Extruder hergestellt wird. Damit kann der Nutverschluss vorteilhafter Weise kostengünstig hergestellt werden. Der Nutverschluss kann dabei auch als Strangextrudat hergestellt werden. Weiterhin besteht der Nutverschluss zumindest teilweise aus thermoplastischem Material. Damit kann der Nutverschluss in einem Extruder verarbeitet werden und eine weitere Bearbeitung kann vorteilhaft alleine durch Erwärmung und weitere Verformung durchgeführt werden. D.h. eine vergleichsweise aufwendige spanende Verarbeitung ist nicht notwendig. Ein Extruder bezeichnet eine Schneckenpresse, die nach dem Funktionsprinzip des Fleischwolfes feste bis dickflüssige Massen unter hohem Druck und hoher Temperatur gleichmäßig aus einer Öffnung herauspresst.

Der Nutverschluss ist optional als Nutverschlusskeil oder als Nutverschlusskappe ausgeführt. Bei Ausführung als Nutverschlusskeil sind in den Seitenwänden der Nut z.B. Schlitze vorgesehen, um den Nutverschlusskeil in der Nut zu führen und zu fixieren. Alternativ sind auch Nasen an den Seitenwänden der Nut zur Führung des Nutverschlusskeils vorstellbar.

Der Nutverschlusskeil weist dann auf der der Leiteranordnung zugewandten Seite zumindest eine zur Leiteranordnung zeigende Wölbung und auf, welche sich zumindest über einen Teil der Länge des Nutverschlusses erstreckt. Ist der Nutverschluss als Nutverschlusskappe ausgeführt, so weist er neben zumindest einer zur Leiteranordnung zeigenden Wölbung und einer zumindest teilweisen Abdeckung auch Seitenflächen auf, welche neben der Wölbung abbiegbar sind. Ist die Nutverschlusskappe in der Nut eingesetzt, dann liegen die Seitenflächen an den Seitenwänden der Nut an. Zur Fixierung der Nutverschlusskappe in der Nut weist die Nut an ihrer Öffnung Nasen an jeder Seite auf. Nutverschlusskappen werden auch als Nut(en)deckschieber bezeichnet.

Die Abdeckung kann aus dem Material der Wölbung sein oder kann aus magnetischem Material. Im zweiten Fall wird das Magnetfeld in der elektrischen Maschine vorteilhaft beeinflusst.

Der durch die Abdeckung entstandene Hohlraum wird vorteilhafter Weise mit offenporigem Material zumindest teilweise ausgefüllt. Damit ist es vorteilhaft möglich, nach Einsetzen des Nutverschlusses den Verformungszustand des Nutverschlusses zu fixieren, indem ein Tränkharz in den Nutverschluss eingebracht wird. Das Tränkharz wird dann von dem offenporigen Material aufgenommen. Durch Aushärten des Tränkharzes wird die Verformung des Nutverschlusses dann fixiert und damit auch die Lage der in der Nut liegenden Leiteranordnung.

Wird der Nutverschluss mit magnetischem Material oder mit offenporigem Material gefertigt, dann kann er auch als Co-Extrudat hergestellt werden. Dann wird das Grundmaterial des Nutverschlusses zusammen mit dem magnetischen und/oder dem offenporigen Material in einem Extruder verarbeitet.

Um die Aufnahmefähigkeit von Tränkharz zu optimieren, weist der Nutverschluss zumindest eine Öffnung an der Wölbung oder der Abdeckung auf. Durch viele kleine Öffnungen könnte so vorteilhaft Tränkharz in den Nutverschluss eindringen und diesen Fixieren. Weiterhin kann dadurch das Tränkharz auch durch den Nutverschluss dringen und die Leiteranordnung fixieren. Durch zumindest eine Öffnung an der Wölbung kann weiterhin vorteilhaft die federnde Wirkung der Wölbung beeinflusst werden.

Wenn der erfindungemäße Nutverschluss in einer elektrischen Maschine eingesetzt wird, können alle oben genannten Vorteile realisiert werden. Die Nutverschlüsse weisen vorteilhafter Weise Mittel zur Aufnahme und/oder Fixierung eines Nutverschlusses auf. Diese Mittel können Schlitze in den Seitenwänden der Nut oder auch Nasen an beiden Seiten der Nutöffnung sein.

Die Erfindung sowie weitere vorteilhafte Ausgestaltungen der Erfindung gemäß den Merkmalen der Unteransprüche werden im folgenden anhand von schematisch dargestellten Ausführungsbeispielen in der Zeichnung näher erläutert, ohne dass dadurch eine Beschränkung der Erfindung auf dieses Ausführungsbeispiel erfolgt; es zeigen:
- FIG 1: einen erfindungsgemäßen Nutverschluss in Form eines Nutverschlusskeils;
- FIG 2: eine Nut mit einem erfindungsgemäßen Nutverschluss- keil;
- FIG 3: einen erfindungsgemäßen Nutverschluss in Form einer Nutverschlusskappe;
- FIG 4: eine Nut mit einer erfindungsgemäßen Nutverschluss- kappe;
- FIG 5: eine beispielhafte elektrische Maschine.

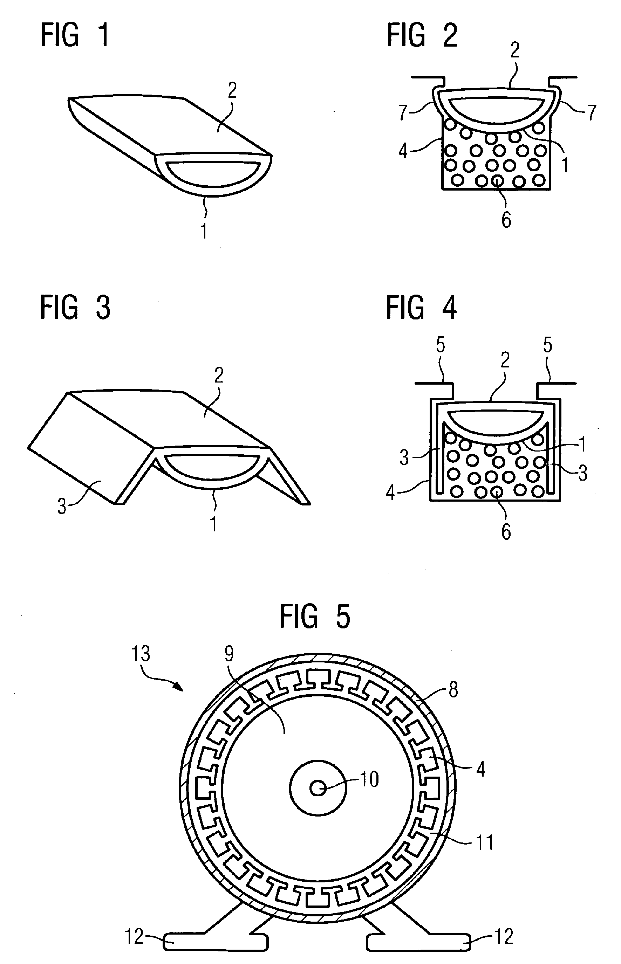

In FIG 1 ist ein erfindungsgemäßer Nutverschluss in Form eines Nutverschlusskeils gezeigt. Dieser besteht in diesem Beispiel aus einer Wölbung 1 und einer Abdeckung 2, welche beide Enden der Wölbung 1 fest miteinander verbindet. Wird der Nutverschlusskeil in die Nut eingeführt, so passt sich der Nutverschlusskeil an die in der Nut eingelegte Leiteranordnung an, indem er sich verformt. Durch die federnde Wirkung der Wölbung 1 wird die Leiteranordnung fest in der Nut fixiert.

Die Abdeckung 2 dient z.B. der Stabilität des Nutverschlusskeils.

FIG 2 zeigt eine Nut 4 mit einem erfindungsgemäßen Nutverschlusskeil. Die Rillen 7 in der Nut 4 führen und fixieren dabei den Nutverschlusskeil. Die federnde Wirkung der Wölbung 2 gewährleistet dabei eine sichere Fixierung der Leiteranordnung 6.

Um die Aufnahmefähigkeit von Tränkharz zu optimieren, kann der Nutverschlusskeil zumindest eine Öffnung an der Wölbung 1 oder der Abdeckung 2 aufweisen. Durch viele kleine Öffnungen an Abdeckung 2 und/oder Wölbung 1 könnte so vorteilhaft Tränkharz in den Nutverschluss eindringen und diesen Fixieren. Weiterhin kann dadurch das Tränkharz auch durch den Nutverschlusskeil dringen und die Leiteranordnung 6 fixieren. Durch zumindest eine Öffnung an der Wölbung 1 kann weiterhin vorteilhaft die federnde Wirkung der Wölbung 1 beeinflusst werden.

FIG 3 zeigt einen erfindungsgemäßen Nutverschluss in Form einer Nutverschlusskappe. Die Nutverschlusskappe weist Seitenflächen 3 auf, welche zur Führung der Nutverschlusskappe in der Nut sowie zur Isolierung der Leiteranordnung 6 in der Nut 4 dienen.

In FIG 4 ist eine Nut 4 mit einer erfindungsgemäßen Nutverschlusskappe gezeigt. Die Seitenwände 3 der Nutverschlusskappe isolieren die Leiteranordnung 6, welche in die Nut 4 eingelegt ist. Die Nutverschlusskappe wird in der Nut 4 durch Nasen 5 an den Seiten der Nutöffnung gehalten. Die federnde Wirkung der Wölbung 2 gewährleistet dabei eine sichere Fixierung der Leiteranordnung 6.

Um die Aufnahmefähigkeit von Tränkharz zu optimieren, kann die Nutverschlusskappe zumindest eine Öffnung an der Wölbung 1 oder der Abdeckung 2 aufweisen. Durch viele kleine Öffnungen an Abdeckung 2 und/oder Wölbung 1 könnte so vorteilhaft Tränkharz in die Nutverschlusskappe eindringen und diesen Fixieren. Weiterhin kann dadurch das Tränkharz auch durch die Nutverschlusskappe dringen und die Leiteranordnung fixieren. Durch zumindest eine Öffnung an der Wölbung 1 kann weiterhin vorteilhaft die federnde Wirkung der Wölbung 1 beeinflusst werden.

FIG 5 zeigt eine beispielhafte elektrische Maschine 13 mit einem Gehäuse 8 und Standfüßen 12. Weiterhin gezeigt sind der Ständer 11 sowie der Läufer 9 mit der Welle 10. Beispielhaft sind einige Nuten 4 im Ständer 11 eingezeichnet.

## Patentansprüche

1. Nutverschluss für eine elektrische Maschine (13), die zur Aufnahme einer elektrischen Leiteranordnung (6) mindestens eine Nut (4) mit einer Nutöffnung enthält, wobei der Nutverschluss zum Verschluss der Nutöffnung einsetzbar ist und auf der der Leiteranordnung (6) zugewandten Seite zumindest eine zur Leiteranordnung (6) zeigende Wölbung (1) aufweist, welche sich zumindest über einen Teil der Länge des Nutverschlusses erstreckt, wobei die Wölbung (1) federnd oder zumindest verformbar ist und die Enden der Wölbung (1) zumindest teilweise durch eine Abdeckung (2) fest miteinander verbunden sind, und wobei der Nutverschluss zumindest teilweise aus thermoplastischem Material als Grundmaterial besteht, **dadurch gekennzeichnet , dass** die Abdeckung (2) aus magnetischem Material ist und dass das Grundmaterial des Nutverschlusses zusammen mit dem magnetischen Material als Co-Extrudat gefertigt ist.

2. Nutverschluss nach Anspruch 1, **dadurchgekennzeichnet**, dass der Nutverschluss ein Nutverschlusskeil ist.

3. Nutverschluss nach Anspruch 1 oder 2, **dadurch gekennzeichnet, dass** der Nutverschluss eine Nutverschlusskappe ist.

4. Nutverschluss nach einem oder mehreren der Ansprüche 1 bis 3, **dadurch gekennzeichnet , dass** der durch die Abdeckung (2) entstandene Hohlraum mit offenporigem Material zumindest teilweise ausgefüllt ist.

5. Nutverschluss nach Anspruch 4, **dadurch gekennzeichnet, dass** der Nutverschluss zusammen mit offenporigem Material als Co-Extrudat gefertigt ist.

6. Nutverschluss nach einem oder mehreren der Ansprüche 1 bis 5, **dadurch gekennzeichnet, dass** der Nutverschluss zumindest eine Öffnung an einer Wölbung (1) oder Abdeckung (2) aufweist.

7. Elektrische Maschine mit zumindest einer Nut (4) und zumindest einem Nutverschluss nach einem oder mehreren der Ansprüche 1 bis 6.

8. Ständer (11) einer elektrischen Maschine mit Mitteln zur Aufnahme und/oder Fixierung eines Nutverschlusses nach einem oder mehreren der Ansprüche 1 bis 6.

## Claims

1. Slot seal for an electrical machine (13) which contains at least one slot (4) with a slot opening for holding an electrical conductor arrangement (6), wherein the slot seal can be inserted in order to seal the slot opening, and has at least one convex curve (1) pointing towards the conductor arrangement (6) on the side facing the conductor arrangement (6), which convex curve (1) extends over at least a part of the length of the slot seal, with the convex curve (1) being sprung or at least deformable, and with the ends of the convex curve (1) being firmly connected to one another at least in places by a cover (2) and with the slot seal being composed at least partially of thermoplastic material as a basic material, **characterized in that** the cover (2) is composed of magnetic material, and **in that** the basic material of the slot seal is manufactured together with the magnetic material as co-extrudate.

2. Slot seal according to Claim 1, **characterized in that** the slot seal is a slot seal wedge.

3. Slot seal according to Claim 1 or 2, **characterized in that** the slot seal is a slot seal cap.

4. Slot seal according to one or more of Claims 1 to 3, **characterized in that** the cavity created by the cover (2) is at least partially filled with open-pore material.

5. Slot seal according to Claim 4, **characterized in that** the slot seal is manufactured together with open-pore material as co-extrudate.

6. Slot seal according to one or more of Claims 1 to 5, **characterized in that** the slot seal has at least one opening on a convex curve (1) or cover (2).

7. Electrical machine having at least one slot (4) and at least one slot seal according to one or more of Claims 1 to 6.

8. Stator (11) of an electrical machine having means for holding and/or fixing a slot seal according to one or more of Claims 1 to 6.

## Revendications

1. Fermeture d'encoche pour une machine ( 13 ) électrique, qui comporte, pour la réception d'un dispositif ( 6 ) conducteur de l'électricité, au moins une encoche ( 4 ) ayant une ouverture d'encoche, la fermeture d'encoche pouvant être ainsi créée pour fermer l'ouverture d'encoche, et ayant du côté tourné vers le dispositif ( 6 ) conducteur au moins une voussure ( 1 ) se prononçant vers le dispositif ( 6 ) conducteur et s'étendant au moins sur une partie de la longueur de la fermeture d'encoche, la voussure ( 1 ) étant élastique ou au moins déformable et les extrémités de la voussure ( 1 ) étant reliées solidement entre elles au moins en partie par une couverture ( 2 ) et dans laquelle la fermeture d'encoche est constituée comme matériau de base au moins en partie en matière thermoplastique, **caractérisée en ce que** la couverture ( 2 ) est en matière magnétique et **en ce que** le matériau de base de la fermeture d'encoche est fabriqué ensemble avec le matériau magnétique sous la forme d'un produit coextrudé.

2. Fermeture d'encoche suivant la revendication 1, **caractérisée en ce que** la fermeture d'encoche est un coin de fermeture d'encoche.

3. Fermeture d'encoche suivant la revendication 1 ou 2, **caractérisée en ce que** la fermeture d'encoche est un chapeau de fermeture d'encoche.

4. Fermeture d'encoche suivant l'une ou plusieurs des revendications 1 à 3, **caractérisée en ce que** la cavité créée par la couverture ( 2 ) est remplie au moins en partie de matériau à pore ouvert.

5. Fermeture d'encoche suivant la revendication 4, **caractérisée en ce que** la fermeture d'encoche est fabriquée ensemble avec du matériau à pore ouvert sous la forme d'un produit coextrudé.

6. Fermeture d'encoche suivant l'une ou plusieurs des revendications 1 à 5, **caractérisée en ce que** la fermeture d'encoche a au moins une ouverture sur une voussure ( 1 ) ou sur la couverture ( 2 ).

7. Machine électrique ayant au moins une encoche ( 4 ) et au moins une fermeture d'encoche suivant l'une ou plusieurs des revendications 1 à 6.

8. Stator ( 11 ) d'une machine électrique ayant des moyens de réception et/ou d'immobilisation d'une fermeture d'encoche suivant l'une ou plusieurs des revendications 1 à 6.
